(19)

Europäisches Patentamt

European Patent Office

Office européen des brevets

(11)   **EP 3 745 335 A1**

(12)   **EUROPEAN PATENT APPLICATION**
published in accordance with Art. 153(4) EPC

(43) Date of publication:
**02.12.2020  Bulletin 2020/49**

(21) Application number: **18902456.5**

(22) Date of filing: **27.08.2018**

(51) Int Cl.:
*G06Q 20/38* (2012.01)      *G06F 21/64* (2013.01)

(86) International application number:
**PCT/CN2018/102398**

(87) International publication number:
**WO 2019/144612 (01.08.2019 Gazette 2019/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **24.01.2018  CN 201810067292**

(71) Applicant: **One Connect Smart Technology Co., Ltd. (Shenzhen)**
**Shenzhen, Guangdong 518000 (CN)**

(72) Inventors:
• **LU, Frank YiFan Chen**
  **Shenzhen, Guangdong 518000 (CN)**
• **JIA, Mu**
  **Shenzhen, Guangdong 518000 (CN)**
• **XIE, DanLi**
  **Shenzhen, Guangdong 518000 (CN)**

(74) Representative: **de Arpe Fernandez, Manuel**
**Arpe Patentes y Marcas, S.L.P.**
**C/Proción, 7 Edif. América II**
**Portal 2, 1° C**
**28023 Madrid-Aravaca (ES)**

(54)   **ZERO-KNOWLEDGE MULTI-ACCOUNT-BOOK EXCHANGE TRANSFER METHOD AND APPARATUS BASED ON BLOCKCHAIN, AND STORAGE MEDIUM**

(57)   Disclosed is a zero-knowledge multi-account-book exchange transfer method and apparatus based on blockchain, and a storage medium. The method comprises: a first user account under a first account book in a blockchain issuing a transaction request with a second user account under a second account book, and receiving a first ciphertext generated by means of a first user performing encryption (S10); acquiring the first ciphertext and a first verification ciphertext that have been subjected to a digital signature (S20); calculating each corresponding first verification value ciphertext by means of several preset legal exchange rate values and the first ciphertext; calculating, by using the first verification value ciphertext and the first verification ciphertext, a second verification value ciphertext for verifying whether a preset exchange rate of the transaction between the first account book and the second account book is within a preset legal exchange rate value range (S30); and if so, completing the transfer transaction based on the first ciphertext and the first verification ciphertext (S40). By means of the method, a multi-account-book transfer operation can be implemented when it can be proved that a multi-account-book transfer transaction is carried out in a legal exchange rate range set in advance, but when a third-party does not know the specific exchange rate.

FIG. 1

EP 3 745 335 A1

**Description**

**CROSS-REFERENCE TO RELATED APPLICATIONS**

This application enjoys the priority of the Chinese Patent Application No. CN2018100672929, entitled "ZERO-KNOWLEDGE MULTI-ACCOUNT-BOOK EXCHANGE TRANSFER METHOD AND APPARATUS BASED ON BLOCKCHAIN, AND STORAGE MEDIUM" and filed on January 24, 2018 in accordance with the Paris Convention, which is incorporated herein by reference in its entirety.

**TECHNICAL FIELD**

This application relates to the technical field of computers, and in particular, to a zero-knowledge multi-account-book exchange transfer method and apparatus based on blockchain, and a storage medium.

**BACKGROUND**

Due to its decentralization, information immutability and other characteristics, blockchain technology is increasingly favored by companies in the fields of finance and insurance, especially the use of the blockchain technology to achieve multi-party transaction events (for example, transfer transaction, payment transaction and other events) are increasingly becoming the focus of attention, for example, when Bank A wants to sell 100 bills to Bank B, if the transaction is performed on the blockchain, then all other nodes on the blockchain would verify the transaction, the advantage is that other parties can participate in confirming the accuracy of the transaction, but cannot interpret (decrypt) the data (also known as zero-knowledge detection).

In order to ensure the privacy of the transaction, at present, the industry generally adopts the privacy transaction encryption/decryption algorithm in the transaction. However, existing privacy transaction encryption/decryption algorithms are generally limited to operations within an account book in a blockchain technology scenario, for example, x shares in an asset account book are transferred from account A to account B. However, in the actual blockchain technology scenario, each transfer likely involves two or more account books, and in some scenarios, a multi-account-book transfer operation is implemented when it can be proved that the transfer transaction of multiple account books is carried out in a legal exchange rate range set in advance, but when a third-party does not know the specific exchange rate, the existing private transaction encryption/decryption algorithms cannot implement such private transaction under the blockchain technology scenario.

**SUMMARY**

An objective of this application is to provide a zero-knowledge multi-account-book exchange transfer method and apparatus based on blockchain, and a storage medium for implementing a multi-account-book transfer operation in a blockchain technology scenario in the case of ensuring the transaction information security.

To achieve the foregoing objective, a first aspect of this application provides a zero-knowledge multi-account-book exchange transfer method based on blockchain, applied to an electronic apparatus and including:

A. if a first user account of a first user under a first account book in a blockchain issues a transaction request with a second user account of a second user under a second account book, receiving a first ciphertext generated by means of the first user performing encryption in advance, where the transaction request is a request for exchanging a preset exchange transaction share according to a preset exchange rate, and the first ciphertext is a first ciphertext generated by encrypting the preset exchange transaction share using a second preset password formula and a corresponding transaction share privacy key;

B. acquiring the first ciphertext and a first verification ciphertext that have been subjected to a digital signature, where the first verification ciphertext is used to calculate an encryption exchange transaction share of the second account book by the first user according to the first preset exchange calculation formula as well as the preset exchange rate and the first ciphertext for the second account book, and the first verification ciphertext is generated by using a preset additional privacy parameter on the encryption exchange transaction share of the second account book;

C. calculating each corresponding first verification value ciphertext by means of several preset legal exchange rate values and the first ciphertext; and calculating, by using each first verification value ciphertext and the first verification ciphertext, a second verification value ciphertext for verifying whether a preset exchange rate of the transaction between the first account book and the second account book is within a preset legal exchange rate value range; and

D. if it is proved by using the second verification value ciphertext that a preset exchange rate of the transaction between the first account book and the second account book is within a preset legal exchange rate value range, completing the transaction between the first user account of the first user under the first account book and the second user account of the second user under the second account book according to a preset rule based on the first ciphertext and the first verification ciphertext.

In addition, to achieve the foregoing objective, a second aspect of this application also provides an electronic apparatus, including a memory and a processor, where a zero-knowledge multi-account-book exchange transfer system based on blockchain capable of running on the processor is stored on the memory, and when the zero-knowledge multi-account-book exchange transfer system based on blockchain is executed by the processor, the following steps are implemented:

if a first user account of a first user under a first account book in a blockchain issues a transaction request with a second user account of a second user under a second account book, receiving a first ciphertext generated by means of the first user performing encryption in advance, where the transaction request is a request for exchanging a preset exchange transaction share according to a preset exchange rate, and the first ciphertext is a first ciphertext generated by encrypting the preset exchange transaction share using a second preset password formula and a corresponding transaction share privacy key;
acquiring the first ciphertext and a first verification ciphertext that have been subjected to a digital signature, where the first verification ciphertext is used to calculate an encryption exchange transaction share of the second account book by the first user according to the first preset exchange calculation formula as well as the preset exchange rate and the first ciphertext for the second account book, and the first verification ciphertext is generated by using a preset additional privacy parameter on the encryption exchange transaction share of the second account book;
calculating each corresponding first verification value ciphertext by means of several preset legal exchange rate values and the first ciphertext; and calculating, by using each first verification value ciphertext and the first verification ciphertext, a second verification value ciphertext for verifying whether a preset exchange rate of the transaction between the first account book and the second account book is within a preset legal exchange rate value range; and if it is proved by using the second verification value ciphertext that a preset exchange rate of the transaction between the first account book and the second account book is within a preset legal exchange rate value range, completing the transaction between the first user account of the first user under the first account book and the second user account of the second user under the second account book according to a preset rule based on the first ciphertext and the first verification ciphertext.

Further, to achieve the foregoing objective, a third aspect of this application also provides a computer readable storage medium, where a zero-knowledge multi-account-book exchange transfer system based on blockchain is stored on the computer readable storage medium, and the zero-knowledge multi-account-book exchange transfer system based on blockchain can be executed by at least one processor, so that the at least one processor executes steps of the zero-knowledge multi-account-book exchange transfer method based on blockchain.

According to the zero-knowledge multi-account-book exchange transfer method and apparatus based on blockchain, and the storage medium proposed in this application, after a first user account of a first user under a first account book in a blockchain issues a transaction request of exchanging a preset exchange transaction share according to a preset exchange rate with a second user account of a second user under a second account book, a first ciphertext generated by means of the first user performing encryption in advance according to a second preset password formula and a corresponding transaction share privacy key for a preset exchange transaction share is received, an encryption exchange transaction share of the second account book is calculated and generated for the second account book according to a first preset exchange calculation formula based on the preset exchange rate and the first ciphertext, and a first verification ciphertext is generated by using a preset additional privacy parameter on the encryption exchange transaction share of the second account book. Each corresponding first verification value ciphertext is calculated by means of several preset legal exchange rate value and the first ciphertext, and a second verification value ciphertext is calculated by using each first verification value ciphertext and the first verification ciphertext. If it is proved by using the second verification value ciphertext that a preset exchange rate of the transaction between the first account book and the second account book is within a preset legal exchange rate value range, the transaction between the first user account of the first user under the first account book and the second user account of the second user under the second account book is completed according to a preset rule based on the first ciphertext and the first verification ciphertext.

Since the first ciphertext can be generated by encrypting the preset exchange transaction share of the first user account under the first account book using the second preset password formula and the corresponding transaction share privacy key, and the encryption exchange transaction share of the second account book is calculated and generated for the second account book, other nodes on the blockchain cannot interpret the specific exchange transaction share data in the transaction process, thereby effectively ensuring the transaction information security in the blockchain technology scenario. Moreover, since the first verification ciphertext is generated by using the preset additional privacy parameter on the encryption exchange transaction share of the second account book, the additional privacy parameter makes the third party unable to know the specific exchange rate, and moreover, whether the preset exchange rate of the transaction between the first account book and the second account book is within a preset legal exchange rate value range is verified by means of the second verification value ciphertext. Therefore, a multi-account-book transfer operation can be implemented when the transaction information security in the blockchain technology scenario is effectively ensured, and it can be proved that a multi-account-book transfer transaction is carried out in a legal exchange rate range set in advance, but when a third-party does not know the specific exchange rate.

## BRIEF DESCRIPTION OF DRAWINGS

FIG. 1 is a schematic diagram of an operating environment of a zero-knowledge multi-account-book exchange transfer system based on blockchain 10 according to a preferred embodiment of this application; and
FIG. 2 is a schematic flowchart of a zero-knowledge multi-account-book exchange transfer method based on blockchain according to an embodiment of this application.

## DESCRIPTION OF EMBODIMENTS

To make the objective, technical solutions and advantages of this application more comprehensible, this application is further described in detail below with reference to the accompanying drawings and embodiments. It should be understood that the specific embodiments described herein are merely illustrative of this application and are not intended to limit this application. All other embodiments obtained by those skilled in the art based on the embodiments of this application without creative efforts shall fall within the scope of protection of this application.

It should be noted that the descriptions involved in this application such as "first" and "second" are only for a descriptive purpose, and should not be construed to indicate or imply a relative importance or implicitly indicate the number of the indicated technical features. Therefore, the features defined by "first" and "second" can explicitly or implicitly include at least one of the features. In addition, the technical solutions between different embodiments can be combined with each other, but needs to be based on the realization of those skilled in the art, and when the combination of the technical solutions is contradictory or impossible to implement, it should be considered that the combination of the technical solutions does not exist, or does not fall within the scope of protection claimed by this application.

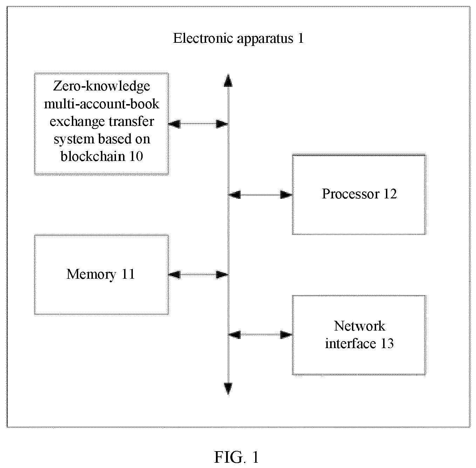

This application provides a zero-knowledge multi-account-book exchange transfer system based on blockchain. Referring to FIG. 1, a schematic diagram of an operating environment of a zero-knowledge multi-account-book exchange transfer system based on blockchain 10 according to a preferred embodiment of this application is illustrated.

In this embodiment, the zero-knowledge multi-account-book exchange transfer system based on blockchain 10 is mounted and run in an electronic apparatus 1. The electronic apparatus 1 may include, but not limited to, a memory 11, a processor 12, and a network interface 13. FIG. 1 shows only the electronic apparatus 1 having components 11-13. However, it should be understood that not all illustrated components need to be implemented, and more or fewer components can be implemented alternatively.

The electronic apparatus 1 is connected to a network (not shown in FIG. 1) by means of the network interface 13 to obtain information. The network may be an Intranet, an Internet, a Global System of Mobile communication (GSM), a Wideband Code Division Multiple Access (WCDMA), a 4G network, a 5G network, Bluetooth, Wi-Fi, a voice network, and other wireless or wired networks.

The memory 11 is at least one type of computer readable storage medium. In some embodiments, the memory 11 can be an internal storage unit of the electronic apparatus 1, such as a hard disk or memory of the electronic apparatus 1. In other embodiments, the memory 11 can also be an external storage device of the electronic apparatus 1, such as a plug-in hard disk equipped on the electronic apparatus 1, a Smart Media Card (SMC), and a Secure Digital (SD) card, and a flash card, etc. Further, the memory 11 can also include an internal storage unit of the electronic apparatus 1 and an external storage device. The memory 11 is used to store application software installed in the electronic apparatus 1 and various types of data, such as a program code of the zero-knowledge multi-account-book exchange transfer system based on blockchain 10. The memory 11 can also be used to temporarily store data that has been output or is about to be output.

In some embodiments, the processor 12 can be a Central Processing Unit (CPU), a microprocessor or other data processing chip for running the program code or processing data stored in the memory 11, e.g., executing the zero-knowledge multi-account-book exchange transfer system based on blockchain 10.

The network interface 13 may include a wireless network interface or a wired network interface. The network interface 13 is generally used to establish a communication connection between the electronic apparatus 1 and other electronic apparatuses.

The zero-knowledge multi-account-book exchange transfer system based on blockchain 10 includes at least one computer readable instruction stored in the memory 11. The at least one computer readable instruction can be executed by the processor 12 to implement various embodiments of this application.

When the zero-knowledge multi-account-book exchange transfer system based on blockchain 10 is executed by the processor 12, the following steps are implemented.

Step S1: If a first user account of a first user under a first account book in a blockchain issues a transaction request with a second user account of a second user under a second account book, a first ciphertext generated by means of the first user performing encryption in advance is received, where the transaction request is a request for exchanging a preset exchange transaction share according to a preset exchange rate, and the first ciphertext is a first ciphertext generated by encrypting the preset exchange transaction share using a second preset password formula and a corresponding transaction share privacy key.

In this embodiment, the user or a mechanism in the blockchain first encrypts the balance of each user account under each account book by using a first preset password formula and a corresponding balance privacy key, and the encrypted balance of each user account under each account book is written to a shared asset account book on each node of the blockchain by means of a smart contract of the blockchain. For example, by adopting the Pederson Commitment algorithm, the first preset password formula is $a'_{ij}=g^{\wedge}a_{ij}*h^{\wedge}x_{ij}$, or $a'_{ij}=h^{\wedge}a_{ij}*g^{\wedge}x_{ij}$, where $a_{ij}$ represents a balance of the j-th user account under the i-th account book, $x_{ij}$ represents a balance privacy key of the j-th user account under the i-th account book, $a'_{ij}$ represents an encrypted balance of the j-th user account under the i-th account book, and g and h are the bases in the discrete logarithm problem, $h=g^{\wedge}c$, c is an unknown number, and i and j are positive integers.

Moreover, the legal exchange rate value is preset when the smart contract of the blockchain is created. For example, the legal exchange rate values can be recorded as: e1, e2, e3, e4,... When the smart contract of the blockchain is created, the legal exchange rate between every two of multiple account books can be preset, for example, the legal exchange rate between an RMB account book and a US dollar account book can only be 6.7, 6.8, 6.9, 7.0, ... and so on.

Before a first user account of a first user under a first account book (for example, the first account book can be an RMB account book) issues a transaction request of exchanging the preset exchange transaction share according to the preset exchange rate with a second user account of a second user under a second account book (for example, the second account book can be a US dollar account book), the first ciphertext is generated by the first user encrypting the preset exchange transaction share using a second preset password formula and a corresponding transaction share privacy key. For example, the second preset password formula is $t'_{1ij}=g^{\wedge}t_{ij}*h^{\wedge}/z_{ij}$, or $t'_{1ij}=h^{\wedge}t_{ij}*g^{\wedge}z_{ij}$, where $t_{1ij}$ represents an exchange transaction share of the j-th first user account under the i-th account book, $z_{1ij}$, represents an exchange transaction share privacy key of the j-th first user account under the i-th account book, $t'_{1ij}$ represents an encryption exchange transaction share of the j-th first user account under the i-th account book, g and h are the bases, h is a n-th power of g, n is a positive integer, and i and j are positive integers.

Step S2: The first ciphertext and a first verification ciphertext that have been subjected to a digital signature are acquired, where the first verification ciphertext is used to calculate an encryption exchange transaction share of the second account book by the first user according to the first preset exchange calculation formula as well as the preset exchange rate and the first ciphertext for the second account book, and the first verification ciphertext is generated by using a preset additional privacy parameter on the encryption exchange transaction share of the second account book.

In this embodiment, if the preset exchange transaction share is exchanged by using the preset exchange rate e (for example, the exchange rate of RMB to US dollar is 7, then e=7), an encryption exchange transaction share of the second account book is calculated for the second account book according to the first preset exchange calculation formula based on the preset exchange rate e and the first ciphertext, and an additional privacy parameter is added to the encryption exchange transaction share of the second account book to generate a first verification ciphertext, the additional privacy parameter is a privacy public key, and only the transaction party knows the additional privacy key corresponding to the additional privacy parameter. The function of adding an additional privacy parameter to the encryption exchange transaction share of the second account book to generate a first verification ciphertext is to enable the third party to verify that the encryption transaction share of the second account book is within the legal transaction range, but the third party does not know the specific exchange rate.

For example, the first preset exchange transaction calculation formula is $t'_{2ij}=h^{\wedge}z_{2ij}*(t'_{1ij})^{\wedge}e=h^{\wedge}z_{2ij}*(g^{\wedge}t_{1ij}*h^{\wedge}z_{1ij})^{\wedge}e=gt_{1ij*e}*hz_{2ij*e}*hz_{2ij}$, or $t'_{2ij}=ht_{1ij*e}*gz_{2ij*e}*gz_{2ij}$, where $t_{1ij*e}$ represents the exchange transaction share of the j-th second user account under the i-th account book, $z_{1ij*e}$ represents the exchange transaction share privacy key of the j-th second user account under the i-th account book, $z'_{2ij}$ represents the exchange transaction share additional privacy key of the j-th second user account under the i-th account book, $t'_{2ij}$ represents the encryption exchange transaction share of the j-th second user account under the i-th account book, g and h are the bases, h is a n-th power of g, n is a positive integer, and i and j are positive integers.

Step S3: Each corresponding first verification value ciphertext is calculated by means of several preset legal exchange rate values and the first ciphertext; and a second verification value ciphertext for verifying whether a preset exchange rate of the transaction between the first account book and the second account book is within a preset legal exchange rate value range is calculated by using each first verification value ciphertext and the first verification ciphertext.

The first user sends the first ciphertext and the first verification ciphertext after being subjected to the digital signature to the second user. After transaction share identification and digital signature of the second user are acquired, the first user publishes the first ciphertext and the first verification ciphertext to each node on a blockchain network, and a first verification value ciphertext corresponding to each reasonable second account book update data (i.e., a second account book update value corresponding to each legal exchange rate) is calculated by means of the smart contract on the blockchain network according to all the preset legal exchange rates (e1, e2, e3, e4, ...) and the first ciphertext, where the first verification value ciphertext differs from the first verification ciphertext in that all the first verification value ciphertexts do not contain the additional privacy parameter. In addition, after the first user sends the first ciphertext and the first verification ciphertext after being subjected to the digital signature to the second user, the second user can directly publish the first ciphertext and the first verification ciphertext to each node on the blockchain network after the transaction share identification and digital signature.

The smart contract calculates, by using each first verification value ciphertext and the first verification ciphertext, a second verification value ciphertext for verifying whether a transaction share exchange rate of the first account book and the second account book is within a preset reasonable exchange rate value range. It should be noted that each second verification value ciphertext is equivalent to a public key. If the first user or the second user wants to prove that the first verification ciphertext is within the legal exchange range, the first or second user necessarily has a private key corresponding to the second verification value ciphertext (the public key). If the first verification ciphertext is indeed within the legal exchange range, then the second verification value ciphertext (the public key) is an additional privacy parameter added to the first verification ciphertext, and the private key corresponding to the second verification value ciphertext (the public key) is the private key corresponding to the additional privacy parameter (the public key) in the first verification ciphertext.

Step S4: If it is proved by using the second verification value ciphertext that a preset exchange rate of the transaction between the first account book and the second account book is within a preset legal exchange rate value range, the transaction between the first user account of the first user under the first account book and the second user account of the second user under the second account book is completed according to a preset rule based on the first ciphertext and the first verification ciphertext.

In this embodiment, it is proved by means of a preset ring signature or a Range Proof verification mode that the preset exchange rate of the transaction between the first account book and the second account book is within a preset legal exchange rate value range. For example, in an optional implementation mode, after a second verification value ciphertext (the public key) corresponding to all legal transaction shares of the second account book is presented on the smart contract, if the first user or the second user verifies that the encryption share encrypted by the first verification ciphertext is a number within a preset reasonable transaction range according to a private key corresponding to the additional privacy parameter in the first verification ciphertext and all the second verification ciphertexts (the public key), it is proved that the preset exchange rate of the transaction between the first account book and the second account book is within a preset legal exchange rate value range.

In another optional implementation mode, the reasonable range of the first verification ciphertext corresponding to the first ciphertext is not necessarily the transaction exchange rate. The first ciphertext and the first verification ciphertext can each represent a number (such as a date). The foregoing algorithm can be used to detect whether the difference between the number represented by the first ciphertext and the number represented by the first verification ciphertext is within a preset range, to prove that the first verification ciphertext is within a preset reasonable exchange rate value, so as to further prove that the preset exchange rate of the transaction between the first account book and the second account book is within a preset legal exchange rate value range.

If it is proved that the first verification ciphertext is within the preset reasonable exchange rate value, the smart contract of the blockchain updates a balance of the first user account of the first user under the first account book and a balance of a third account of the second user under the first account book according to the first ciphertext, and updates a balance of a fourth account of the first user under the second account book and a balance of the second user account of the second user under the second account book according to the first verification ciphertext. For example, a transfer transaction is performed on the preset exchange transaction share between the first user account of the first user under the first account book and the second user account of the second user under the second account book according to the preset exchange rate. All user accounts of the first user under the first account book (for example, the first account book can be an RMB account book) and the second account book (for example, the second account book can be a US dollar account book) can also be updated simultaneously (e.g., balance update). All user accounts of the second user under the first account book (for example, the first account book can be the RMB account book) and the second account book (for example, the second account book can be the US dollar account book) can be updated simultaneously (e.g., balance update). For example, if A wants to exchange RMB for US dollars with B, then the RMB and US dollar accounts of A and B in this embodiment can be simultaneously updated to complete the private transaction of multi-account-book transfer under the blockchain technology scenario.

Compared with the prior art, this embodiment receives a first ciphertext generated by means of the first user performing encryption in advance according to a second preset password formula and a corresponding transaction share privacy key for a preset exchange transaction share after a first user account of a first user under a first account book in a blockchain issues a transaction request of exchanging a preset exchange transaction share according to a preset exchange rate with a second user account of a second user under a second account book, calculates and generates an encryption exchange transaction share of the second account book for the second account book according to a first preset exchange calculation formula based on the preset exchange rate and the first ciphertext, and generates a first verification ciphertext on the encryption exchange transaction share of the second account book by using a preset additional privacy parameter. Each corresponding first verification value ciphertext is calculated by means of several preset legal exchange rate value and the first ciphertext, and a second verification value ciphertext is calculated by using each first verification value ciphertext and the first verification ciphertext. If it is proved by using the second verification value ciphertext that a preset exchange rate of the transaction between the first account book and the second account book is within a preset legal exchange rate value range, the transaction between the first user account of the first user under the first account book and the second user account of the second user under the second account book is completed according to a preset rule based on the first ciphertext and the first verification ciphertext.

Since the first ciphertext can be generated by encrypting the preset exchange transaction share of the first user account under the first account book using the second preset password formula and the corresponding transaction share privacy key, and the encryption exchange transaction share of the second account book is calculated and generated for the second account book, other nodes on the blockchain cannot interpret the specific exchange transaction share data in the transaction process, thereby effectively ensuring the transaction information security in the blockchain technology scenario. Moreover, since the first verification ciphertext is generated by using the preset additional privacy parameter on the encryption exchange transaction share of the second account book, the additional privacy parameter makes the third party unable to know the specific exchange rate, and moreover, whether the preset exchange rate of the transaction between the first account book and the second account book is within a preset legal exchange rate value range is verified by means of the second verification value ciphertext. Therefore, a multi-account-book transfer operation can be implemented when the transaction information security in the blockchain technology scenario is effectively ensured, and it can be proved that a multi-account-book transfer transaction is carried out in a legal exchange rate rangeset in advance, but when a third-party does not know the specific exchange rate.

In an optional embodiment, based on the foregoing embodiment of FIG. 1, the zero-knowledge multi-account-book exchange transfer system based on blockchain 10 is executed by the processor 12 to implement the step S4, specifically including:

updating a balance of the first user account of the first user under the first account book and a balance of the third account of the second user under the first account book according to the first ciphertext, and updating a balance of the second user account of the second user under the second account book and a balance of the fourth account of the first user under the second account book according to the first verification ciphertext.

In this embodiment, after the first user account of the first user under the first account book (for example, the first account book can be an RMB account book) issues a transaction request with a preset transaction share and legal exchange price with the second user account of the second user under the second account book (for example, the second account book can be a US dollar account book), the smart contract of the blockchain updates a balance of the first user account of the first user under the first account book and a balance of the third account of the second user under the first account book according to the first ciphertext, and updates a balance of the fourth account of the first user under the second account book and a balance of the second user account of the second user under the second account book according to the first verification ciphertext. The first user account and the fourth account are both accounts of the first user, and are the accounts of the first user under the first account book and the second account book, respectively. For example, the first user account is an account of the RMB account book of the first user. The fourth account is an account of the US dollar account book of the first user. The second user account and the third account are both accounts of the second user, and are the accounts of the second user under the second account book and the first account book, respectively. For example, the second user account is an account of the US dollar account book of the second user. The third account is an account of the RMB account book of the second user.

Specifically, the step of updating a balance of the first user account of the first user under the first account book and a balance of a third account of the second user under the first account book according to the first ciphertext includes the following steps.

The smart contract deducts the preset exchange transaction share from the balance of the first user account of the first user under the first account book according to a first preset balance calculation formula, calculates a first new balance of the first user account of the first user under the first account book, and updates the calculated first new balance to a shared asset account book. For example, the first preset balance calculation formula is $a_{1ij}''=a_{1ij}'/t_{1ij}'=(g^{a_{1ij}}*h^{x_{1ij}})/(g^{t_{ij}}*h^{z_{ij}})=g^{(a_{1ij}-t_{ij})}*h^{(x_{1ij}-z_{ij})}$, or $a_{1ij}''=h^{(a_{1ij}-t_{ij})}*g^{(x_{1ij}-z_{ij})}$, where $a_{1ij}$ represents a balance

of the j-th first user account under the i-th account book, $x_{1ij}$ represents a balance privacy key of the j-th first user account under the i-th account book, $a_{1ij}''$ represents an encrypted new balance of the j-th first user account under the i-th account book, g and h are the bases, h is a n-th power of g, i and j are positive integers, "$a_{1ij}-t_{ij}$" represents a new balance of the j-th first user account under the i-th account book, "$x_{1ij}-z_{ij}$" represents a new confused balance privacy key of the j-th first user account under the i-th account book, $t_{ij}$ represents a transaction share of the j-th first user account under the i-th account book, and $z_{ij}$ represents a transaction share privacy key of the j-th first user account under the i-th account book.

The smart contract adds the preset exchange transaction share to the balance of the third account of the second user under the first account book according to a second preset balance calculation formula, calculates a second new balance of the third account of the second user under the first account book, and updates the calculated second new balance to the shared asset account book. For example, the second preset balance calculation formula is $a_{3ij}''=a_{3ij}'/t_{1ij}'=(g^{a_{3ij}}*h^{y_{3ij}})*(g^{t_{ij}}*h^{z_{ij}})=g^{(a_{3ij}+t_{ij})}*h^{(y_{3ij}-z_{ij})}$, or $a_{3ij}''=h^{(a_{3ij}+t_{ij})}*g^{(y_{3ij}+z_{ij})}$, where $a_{3ij}$ represents a balance of the j-th third account under the i-th account book, $y_{3ij}$ represents a balance privacy key of the j-th third account under the i-th account book, $a_{3ij}''$ represents an encrypted new balance of the j-th third account under the i-th account book, g and h are the bases, h is a n-th power of g, i and j are positive integers, "$a_{3ij}+t_{ij}$" represents a new balance of the j-th third account under the i-th account book, "$y_{3ij}+z_{ij}$" represents a new confused balance privacy key of the j-th third account under the i-th account book, $t_{ij}$ represents a transaction share of the j-th third account under the i-th account book, and $z_{ij}$ represents a transaction share privacy key of the j-th third account under the i-th account book.

The step of updating a balance of a fourth account of the first user under the second account book and a balance of the second user account of the second user under the second account book according to the first verification ciphertext includes the following steps.

The smart contract deducts the preset exchange transaction share from the balance of the second user account of the second user under the second account book according to a third preset balance calculation formula, calculates a third new balance of the second user account of the second user under the second account book, and updates the calculated third new balance to the shared asset account book. For example, the third preset balance calculation formula is $a_{2ij}''=a_{2ij}'/t_{2ij}'=(g^{a_{2ij}}*h^{x_{2ij}})*(g^{(t_{1ij}*e)}*h^{(z_{1ij}*e)}*h^{z_{2ij}})=g^{(a_{2ij}-(t_{ij}*e))}*h^{(x_{2ij}-(z_{1ij}*e)-z_{2ij})}$, or $a_{2ij}''=h^{(a_{2ij}-(t_{1ij}*e))}*g^{(x_{2ij}-(z_{1ij}*e)-z_{2ij})}$, where $a_{2ij}$ represents a balance of the j-th second user account under the i-th account book, $x_{2ij}$ represents a balance privacy key of the j-th second user account under the i-th account book, $a_{2ij}''$ represents an encrypted new balance of the j-th second user account under the i-th account book, g and h are the bases, h is a n-th power of g, i and j are positive integers, "$a_{2ij}-(t_{ij}*e)$" represents a new balance of the j-th second user account under the i-th account book, "$(x_{2ij}-(z_{1ij}*e)-z_{2ij})$" represents a new confused balance privacy key of the j-th second user account under the i-th account book, $t_{1ij}*e$" represents a transaction share of the j-th second user account under the i-th account book, and "$z_{1ij}*e$" represents a transaction share privacy key of the j-th second user account under the i-th account book.

The smart contract adds the preset exchange transaction share to the balance of the fourth account of the first user under the second account book according to a fourth preset balance calculation formula, calculates a fourth new balance of the fourth account of the first user under the second account book, and updates the calculated fourth new balance to the shared asset account book. For example, the fourth preset balance calculation formula is $a_{4ij}''=a_{4ij}'*t_{2ij}'=(g^{a_{4ij}}*h^{y_{4ij}})*(g^{(t_{1ij}e)}*h^{(z_{1ij}*e)}*h^{z_{2ij}})=g^{(a_{4ij}+t_{1ij}*e)}*h^{(y_{4ij}+(z_{1ij}*e)+z_{2ij})}$, or $a_{4ij}''=h^{(a_{4ij}+(t_{ij}*e))}*g^{(y_{4ij}+(z_{1ij}*e))}$, where $a_{4ij}$ represents a balance of the j-th fourth account under the i-th account book, $y_{4ij}$ represents a balance privacy key of the j-th fourth account under the i-th account book, $a_{4ij}''$ represents an encrypted new balance of the j-th fourth account under the i-th account book, g and h are the bases, h is a n-th power of g, i and j are positive integers, "$a_{4ij}+(t_{1ij}*e)$" represents a new balance of the j-th fourth account under the i-th account book, "$(y_{4ij}+(z_{1ij}*e)+z_{2ij})$" represents a new confused balance privacy key of the j-th fourth account under the i-th account book, "$t_{1ij}*e$" represents a transaction share of the j-th fourth account under the i-th account book, and "$z_{1ij}*e$" represents a transaction share privacy key of the j-th fourth account under the i-th account book.

In a specific embodiment, an account book 1 and an account book 2 are used as examples below for description.

Pre-step 1: a legal exchange rate value is set at the beginning of creation of the smart contract of the blockchain. For example, the legal exchange rate value is 1"1, 1"2, 1"3 ,1"4... The smart contract can predetermine the legal exchange rates. For example, the exchange rate of RMB and US dollar can only be 6.7, 6.8, 6.9, 7.0...

Pre-step 2: the balance of each user account under each account book is encrypted in the smart contract of the blockchain by using a password formula having an additive homomorphic property, and only an owner of the account can read the balance of his/her own account by decrypting with his/her own "account privacy key". Here, Pederson Commitment and ECC (elliptic curve) are used as examples for description. Certainly, other modes such as RSA and Diffie-Hellman are not limited. For example, Pederson Commitment can be used to represent each account. An account A exchanges the balance of the account book 1 for the balance of the account B in the account book 2. For example, A exchanges RMB (the account book 1) for US dollar (the account book 2) with B, A transfers some of the RMB balance in the account book 1 to B, and B transfer his/her US dollar to A in the account book 2. Specifically:

For the account book 1, the definition is as follows:

a1 = the balance of the account book 1 of the account A
a1' = the balance of the account book 1 of the account A after password confusion
x1 = the balance privacy key of the account book 1 of the account A
The balance of the account A is obtained: $a1'=g^{a1}*h^{x1}$.

Definition:

b1 = the RMB balance of the account B
b1' = the RMB balance of the account B after password confusion
y1 = the RMB balance privacy key of the account B

The balance of the account B is obtained: $b1'=g^{b1}*h^{y1}$.
For the account book 2, the definition is as follows:

a2 = the balance of the account book 2 of the account A
a2' = the balance of the account book 2 of the account A after password confusion
x2 = the balance privacy key of the account book 2 of the account A

The balance of the account A is obtained: $a2'=g^{a2}*h^{x2}$.

Definition:

b2 = the RMB balance of the account B
b2' = the RMB balance of the account B after password confusion
y2 = the RMB balance privacy key of the account B

The balance of the account B is obtained: $b2'=g^{b2}*h^{y2}$.
Implementation step 1: if A wants to exchange the balance of the account book 1 for the balance of the account book 2 of B, A creates several ciphertexts, the first ciphertext is a transaction share (a first ciphertext) of the account book 1 protected by an additive homomorphic ciphertext, the second ciphertext is a transaction share (a first verification ciphertext) of the account book 2 protected by the additive homomorphic ciphertext, and the third ciphertext is a first verification ciphertext and a second verification ciphertext which prove that the third party verifies in a zero-knowledge environment that the exchange rate of the first account book and the second account book is within a legal range. Specifically:
For the first ciphertext, the transfer initiator (A) generates a homomorphic privacy key for the first ciphertext and a privacy key and an additional parameter for the first verification ciphertext and sends same to the counter party (B) together with the first ciphertext and the first verification ciphertext, and after the identification of B and the digital signature of the first ciphertext and the first verification ciphertext, the entire transaction and the signature of the party B are sent to the blockchain network (the digital signature of the party B represents the identification of the transaction share and the exchange rate).

Definition:

t = the transaction share of the account book 1
t1' = the transaction share of the second account book after password confusion
z1 = the transaction share privacy key of the first account book

The first ciphertext (the transaction share of the account book 1) is obtained: $t1'=g^t*h^{z1}$.
The first verification ciphertext is defined:

e = the exchange rate, which should actually be one of the legal exchange rate ranges (r1, r2, r3, r4)

t*e = te = the transaction share of the second account book after password confusion

z2 = the transaction share additional privacy key of the second account book

t2' = the transaction share of the account book 2

The first verification ciphertext (the transaction share of the account book 2) is obtained: $t2'=g^{\wedge}te*h^{\wedge}zle*h^{\wedge}z2$.

For the first verification ciphertext, since e needs to be one of the preset reasonable exchange rate values (r1, r2, r3, r4), when the transaction share of the first account book is t, the transaction share of the second account book needs to be one of t*r1, t*r2, t*r3, and t*r4. Assuming e = r2, the transaction share of the second account book is t*r2. By means of the first ciphertext and the reasonable exchange rate value, the smart contract of the blockchain can easily calculate the confused reasonable transaction share of the second account book, then

the first verification ciphertext is as follows:

$t21=(g^{\wedge}t*h^{\wedge}z1)^{\wedge}r1=g^{\wedge}(t*r1)*h^{\wedge}(z1*r1)$

$t22=(g^{\wedge}t*h^{\wedge}z1)^{\wedge}r2=g^{\wedge}(t*r2)*h^{\wedge}(z1*r2)$

$t23=(g^{\wedge}t*h^{\wedge}z1)^{\wedge}r3=g^{\wedge}(t*r3)*h^{\wedge}(z1*r3)$

$t24=(g^{\wedge}t*h^{\wedge}z1)^{\wedge}r4=g^{\wedge}(t*r4)*h^{\wedge}(z1*r4)$

Due to the exchange rate privacy requirement, the transaction initiator cannot directly provide any one of t21-t24, and the transaction initiator adds a confusion key z2 to the transaction share in the provided second account book, so that the first verification ciphertext becomes $t2'=t22'=g^{\wedge}(t*e)*h^{\wedge}(z1*e)*h^{\wedge}z2=g^{\wedge}(t*r2)*h^{\wedge}(z1*r2)*h^{\wedge}z2$. Due to the existence of the confusion key z2, no party in the blockchain knows that the transaction share of the second account book has evolved from any of the shares t21-t24, or determines whether the transaction is still within the reasonable exchange rate range. Therefore, the transaction initiator needs to provide evidence that the transaction share of the second account book is still within the reasonable exchange rate range.

In this embodiment, the evidence can be provided by a ring signature. Four (here, only four are used as an example for description, and there may be more) public and private keys of the ring signature are:

sk1: t21 private key

sk2:t22 private key

sk3:t23 private key

sk4:t24 private key

For the second verification ciphertext, each private key has the same ciphertext generated by converting each transaction share of the second account book to the correct transaction share:

$$t2'=(g^{\wedge}(t*r1)*h^{\wedge}(z1*r1)*h^{\wedge}sk1)$$

$$t2'=(g^{\wedge}(t*r2)*h^{\wedge}(z1*r2)*h^{\wedge}sk2)$$

$$t2'=(g^{\wedge}(t*r3)*h^{\wedge}(z1*r3)*h^{\wedge}sk3)$$

$$t2'=(g^{\wedge}(t*r4)*h^{\wedge}(z1*r4)*h^{\wedge}sk4)$$

The second verification ciphertext (pk1,pk2,pk3,pk4):

$$pk1=h^{\wedge}sk1=(g^{\wedge}(t*r1)*h^{\wedge}(z1*r1)*h^{\wedge}sk1)/(g^{\wedge}(t*r1)*h^{\wedge}(z1*r1))=h^{\wedge}?$$

$$pk2=h^{\wedge}sk2=(g^{\wedge}(t*r2)*h^{\wedge}(z1*r2)*h^{\wedge}sk2)/(g^{\wedge}(t*r2)*h^{\wedge}(z1*r2))=h^{\wedge}sk2=$$

$$hAz2$$

$$pk3=h^\wedge sk3=(g^\wedge(t*r3)*h^\wedge(z1*r3)*h^\wedge sk3)/(g^\wedge(t*r3)*h^\wedge(z1*r3))=h^\wedge?$$

$$pk4=h^\wedge sk4=(g^\wedge(t*r4)*h^\wedge(z1*r4)*h^\wedge sk4)/(g^\wedge(t*r4)*h^\wedge(z1*r4))=h^\wedge?$$

It is obvious that the transaction initiator only knows that the corresponding private key is z2 when the exchange rate is r2. The ring signature evidence (s) is generated by z2, pk1, pk2, pk3, pk4, and a few parameters to prove that the exchange rate is one of the reasonable exchange rate values.

Implementation step 2 A: the smart contract verifies that the transaction share of the first account book and the second account book is within the reasonable exchange rate value. For example, the transaction share of the first account book and the second account book is verified to be within the reasonable exchange rate value by means of the ring signature or Range Proof.

Implementation step 2 B: the transaction share is added to the balance of the account A of the account book 1, and meanwhile, the transaction share is deducted from the balance of the account B of the account book 1. Specifically:

a new share of the account A in the account book 1: a1"=a1'*t'

$$a1"=(g^\wedge a1*h^\wedge x1)*(g^\wedge t*h^\wedge z1)$$

$$a1"=g^\wedge(a1+t)*h^\wedge(x1+z1)$$

a new balance of the account A = a1+t
a new confusion privacy key of the account A: x1'=(x1+z1).

A new share of the account B in the account book 1: b1"=b1'/t'

$$b1"=(g^\wedge b1*h^\wedge y1)/(g^\wedge t*h^\wedge z1)$$

$$b1"=g^\wedge(b1-t)*h^\wedge(y1-z1)$$

a new balance of the account B: b1'=b1-t
a new confusion privacy key of the account B: y1'=y1-Z1.

Implementation step 2 C: the transaction share is deducted from the balance of the account A of the account book 2, and meanwhile, the transaction share is added to the balance of the account B of the account book 2. Specifically:

a new share of the account A in the account book 2: a2"=a2'/t2'

$$a2"=(g^\wedge a2*h^\wedge x2)/(g^\wedge(t*e)*h^\wedge(z1*e)*h^\wedge z2)$$

$$a2"=g^\wedge(a2-te)*h^\wedge(x2-z1*e-z2)$$

a new balance of the account A = a2-te
a new confusion privacy key of the account A: x2'=(x2-z1*e-z2).

A new share of the account B in the account book 2: b2"=b2'*te'

$$b2"=(g^\wedge b2*h^\wedge y2)*(g^\wedge(t*e)*h^\wedge(z1*e)*h^\wedge z2)$$

$$b2''=g^{\wedge}(b2+te)*h^{\wedge}(y2+z1*e+z2)$$

a new balance of the account B: $b2'=b2+te$

a new confusion privacy key of the account B: $y2'=y2+z1*e+z2$.

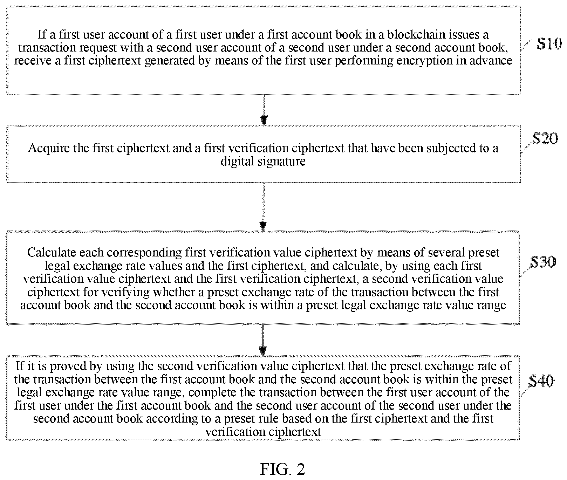

As shown in FIG. 2, FIG. 2 is a schematic flowchart of a zero-knowledge multi-account-book exchange transfer method based on blockchain according to an embodiment of this application. The zero-knowledge multi-account-book exchange transfer method based on blockchain includes the following steps.

Step S10: If a first user account of a first user under a first account book in a blockchain issues a transaction request with a second user account of a second user under a second account book, a first ciphertext generated by means of the first user performing encryption in advance is received, where the transaction request is a request for exchanging a preset exchange transaction share according to a preset exchange rate, and the first ciphertext is a first ciphertext generated by encrypting the preset exchange transaction share using a second preset password formula and a corresponding transaction share privacy key.

In this embodiment, the user or a mechanism in the blockchain first encrypts the balance of each user account under each account book by using a first preset password formula and a corresponding balance privacy key, and the encrypted balance of each user account under each account book is written to a shared asset account book on each node of the blockchain by means of a smart contract of the blockchain. For example, the Pederson Commitment algorithm is adopted, the first preset password formula is $a'_{ij}=g^{\wedge}a_{ij}*h^{\wedge}x_{ij}$, or $a'_{ij}=h^{\wedge}a_{ij}*g^{\wedge}x_{ij}$, where $a_{ij}$ represents a balance of the j-th user account under the i-th account book, $x_{ij}$ represents a balance privacy key of the j-th user account under the i-th account book, $a'_{ij}$ represents an encrypted balance of the j-th user account under the i-th account book, and g and h are the bases in the discrete logarithm problem, $h=g^{\wedge}c$, c is an unknown number, and i and j are positive integers.

Moreover, the legal exchange rate value is preset when the smart contract of the blockchain is created. For example, the legal exchange rate values can be recorded as: e1, e2, e3, e4,... When the smart contract of the blockchain is created, the legal exchange rate between every two of multiple account books can be preset, for example, the legal exchange rate between an RMB account book and a US dollar account book can only be 6.7, 6.8, 6.9, 7.0, ... and so on.

Before a first user account of a first user under a first account book (for example, the first account book can be the RMB account book) issues a transaction request of exchanging the preset exchange transaction share according to the preset exchange rate with a second user account of a second user under a second account book (for example, the second account book can be the US dollar account book), the first ciphertext is generated by the first user encrypting the preset exchange transaction share using a second preset password formula and a corresponding transaction share privacy key. For example, the second preset password formula is $t'_{1ij}=g^{\wedge}t_{ij}*h^{\wedge}z_{ij}$, or $t'_{1ij}=h^{\wedge}t_{ij}*g^{\wedge}z_{ij}$, where $t_{1ij}$ represents an exchange transaction share of the j-th first user account under the i-th account book, $z_{1ij}$ represents an exchange transaction share privacy key of the j-th first user account under the i-th account book, $t'_{1ij}$ represents an encryption exchange transaction share of the j-th first user account under the i-th account book, g and h are the bases, h is a n-th power of g, n is a positive integer, and i and j are positive integers.

Step S20: The first ciphertext and a first verification ciphertext that have been subjected to a digital signature are acquired, where the first verification ciphertext is used to calculate an encryption exchange transaction share of the second account book by the first user according to the first preset exchange calculation formula as well as the preset exchange rate and the first ciphertext for the second account book, and the first verification ciphertext is generated by using a preset additional privacy parameter on the encryption exchange transaction share of the second account book.

In this embodiment, if the preset exchange transaction share is exchanged by using the preset exchange rate e (for example, the exchange rate of RMB to US dollar is 7, then e=7), an encryption exchange transaction share of the second account book is calculated for the second account book according to the first preset exchange calculation formula based on the preset exchange rate e and the first ciphertext, and an additional privacy parameter is added to the encryption exchange transaction share of the second account book to generate a first verification ciphertext, the additional privacy parameter is a privacy public key, and only the transaction party knows the additional privacy key corresponding to the additional privacy parameter. The function of adding an additional privacy parameter to the encryption exchange transaction share of the second account book to generate a first verification ciphertext is to enable the third party to verify that the encryption transaction share of the second account book is within the legal transaction range, but the third party does not know the specific exchange rate.

For example, the first preset exchange transaction calculation formula is $t'_{2ij}=h^{\wedge}z_{2ij}*(t'_{1ij})^{\wedge}e=h^{\wedge}z_{2ij}*(g^{\wedge}t_{1ij}*h^{\wedge}z_{1ij})^{\wedge}e=gt_{1ij*e}*hz_{2ij*e}*hz_{2ij}$, or $t'_{2ij}=ht_{1ij*e}*gz_{2ij*e}*gz_{2ij}$, where $t_{1ij*e}$ represents the exchange transaction share of the j-th second user account under the i-th account book, $z_{1ij}*e$ represents the exchange transaction share privacy key of the j-th second user account under the i-th account book, $z_{2ij}$ represents the exchange transaction share additional privacy key of the j-th second user account under the i-th account book, $t'_{2ij}$ represents the encryption exchange transaction share of the j-th second user account under the i-th account book, g and h are the bases, h is a n-th power of g, n is a positive integer, and i and j are positive integers.

Step S30: Each corresponding first verification value ciphertext is calculated by means of several preset legal exchange rate values and the first ciphertext; and a second verification value ciphertext for verifying whether a preset exchange rate of the transaction between the first account book and the second account book is within a preset legal exchange rate value range is calculated by using each first verification value ciphertext and the first verification ciphertext.

The first user sends the first ciphertext and the first verification ciphertext after being subjected to the digital signature to the second user. After transaction share identification and digital signature of the second user are acquired, the first user publishes the first ciphertext and the first verification ciphertext to each node on a blockchain network, and a first verification value ciphertext corresponding to each reasonable second account book update data (i.e., a second account book update value corresponding to each legal exchange rate) is calculated by means of the smart contract on the blockchain network according to all the preset legal exchange rates (e1, e2, e3, e4, ...) and the first ciphertext, where the first verification value ciphertext differs from the first verification ciphertext in that all the first verification value ciphertexts do not contain the additional privacy parameter. In addition, after the first user sends the first ciphertext and the first verification ciphertext after being subjected to the digital signature to the second user, the second user can directly publish the first ciphertext and the first verification ciphertext to each node the blockchain network after the transaction share identification and digital signature.

The smart contract calculates, by using each first verification value ciphertext and the first verification ciphertext, a second verification value ciphertext for verifying whether a transaction share exchange rate of the first account book and the second account book is within a preset reasonable exchange rate value range. It should be noted that each second verification value ciphertext is equivalent to a public key. If the first user or the second user wants to prove that the first verification ciphertext is within the legal exchange range, the first or second user necessarily has a private key corresponding to the second verification value ciphertext (the public key). If the first verification ciphertext is indeed within the legal exchange range, then the second verification value ciphertext (the public key) is an additional privacy parameter added to the first verification ciphertext, and the private key corresponding to the second verification value ciphertext (the public key) is the private key corresponding to the additional privacy parameter (the public key) in the first verification ciphertext.

Step S40: If it is proved by using the second verification value ciphertext that a preset exchange rate of the transaction between the first account book and the second account book is within a preset legal exchange rate value range, the transaction between the first user account of the first user under the first account book and the second user account of the second user under the second account book is completed according to a preset rule based on the first ciphertext and the first verification ciphertext.

In this embodiment, it is proved by means of a preset ring signature or a Range Proof verification mode that the preset exchange rate of the transaction between the first account book and the second account book is within a preset legal exchange rate value range. For example, in an optional implementation mode, after a second verification value ciphertext (the public key) corresponding to all legal transaction shares of the second account book is presented on the smart contract, if the first user or the second user verifies that the encryption share encrypted by the first verification ciphertext is a number within a preset reasonable transaction range according to a private key corresponding to the additional privacy parameter in the first verification ciphertext and all the second verification ciphertexts (the public key), it is proved that the preset exchange rate of the transaction between the first account book and the second account book is within a preset legal exchange rate value range.

In another optional implementation mode, the reasonable range of the first verification ciphertext corresponding to the first ciphertext is not necessarily the transaction exchange rate. The first ciphertext and the first verification ciphertext can each represent a number (such as a date). The foregoing algorithm can be used to detect whether the difference between the number represented by the first ciphertext and the number represented by the first verification ciphertext is within a preset range, to prove that the first verification ciphertext is within a preset reasonable exchange rate value, so as to further prove that the preset exchange rate of the transaction between the first account book and the second account book is within a preset legal exchange rate value range.

If it is proved that the first verification ciphertext is within the preset reasonable exchange rate value, the smart contract of the blockchain updates a balance of the first user account of the first user under the first account book and a balance of a third account of the second user under the first account book according to the first ciphertext, and updates a balance of a fourth account of the first user under the second account book and a balance of the second user account of the second user under the second account book according to the first verification ciphertext. For example, a transfer transaction is performed on the preset exchange transaction share between the first user account of the first user under the first account book and the second user account of the second user under the second account book according to the preset exchange rate. All user accounts of the first user under the first account book (for example, the first account book can be an RMB account book) and the second account book (for example, the second account book can be a US dollar account book) can also be updated simultaneously (e.g., balance update). All user accounts of the second user under the first account book (for example, the first account book can be the RMB account book) and the second account book (for example, the second account book can be the US dollar account book) can be updated simultaneously (e.g., balance update). For example, if A wants to exchange RMB for US dollars with B, then the RMB and US dollar accounts of A and B in this embodiment can be simultaneously updated to complete the private transaction of multi-account-book transfer under the blockchain technology scenario.

Compared with the prior art, this embodiment receives a first ciphertext generated by means of the first user performing encryption in advance according to a second preset password formula and a corresponding transaction share privacy key for a preset exchange transaction share after a first user account of a first user under a first account book in a blockchain issues a transaction request of exchanging a preset exchange transaction share according to a preset exchange rate with a second user account of a second user under a second account book, calculates and generates an encryption exchange transaction share of the second account book for the second account book according to a first preset exchange calculation formula based on the preset exchange rate and the first ciphertext, and generates a first verification ciphertext on the encryption exchange transaction share of the second account book by using a preset additional privacy parameter. Each corresponding first verification value ciphertext is calculated by means of several preset legal exchange rate value and the first ciphertext, and a second verification value ciphertext is calculated by using each first verification value ciphertext and the first verification ciphertext. If it is proved by using the second verification value ciphertext that a preset exchange rate of the transaction between the first account book and the second account book is within a preset legal exchange rate value range, the transaction between the first user account of the first user under the first account book and the second user account of the second user under the second account book is completed according to a preset rule based on the first ciphertext and the first verification ciphertext.

Since the first ciphertext can be generated by encrypting the preset exchange transaction share of the first user account under the first account book using the second preset password formula and the corresponding transaction share privacy key, and the encryption exchange transaction share of the second account book is calculated and generated for the second account book, other nodes on the blockchain cannot interpret the specific exchange transaction share data in the transaction process, thereby effectively ensuring the transaction information security in the blockchain technology scenario. Moreover, since the first verification ciphertext is generated by using the preset additional privacy parameter on the encryption exchange transaction share of the second account book, the additional privacy parameter makes the third party unable to know the specific exchange rate, and moreover, whether the preset exchange rate of the transaction between the first account book and the second account book is within a preset legal exchange rate value range is verified by means of the second verification value ciphertext. Therefore, a multi-account-book transfer operation can be implemented when the transaction information security in the blockchain technology scenario is effectively ensured, and it can be proved that a multi-account-book transfer transaction is carried out in a legal exchange rate rangeset in advance, but when a third-party does not know the specific exchange rate.

In an optional embodiment, based on the foregoing embodiment, step S40 specifically includes:

updating a balance of the first user account of the first user under the first account book and a balance of the third account of the second user under the first account book according to the first ciphertext, and updating a balance of the second user account of the second user under the second account book and a balance of the fourth account of the first user under the second account book according to the first verification ciphertext.

In this embodiment, after the first user account of the first user under the first account book (for example, the first account book can be an RMB account book) issues a transaction request with a preset transaction share and legal exchange price of the second user account of the second user under the second account book (for example, the second account book can be a US dollar account book), the smart contract of the blockchain updates a balance of the first user account of the first user under the first account book and a balance of the third account of the second user under the first account book according to the first ciphertext, and updates a balance of the fourth account of the first user under the second account book and a balance of the second user account of the second user under the second account book according to the first verification ciphertext. The first user account and the fourth account are both accounts of the first user, and are the accounts of the first user under the first account book and the second account book, respectively. For example, the first user account is an account of the RMB account book of the first user. The fourth account is an account of the US dollar account book of the first user. The second user account and the third account are both accounts of the second user, and are the accounts of the second user under the second account book and the first account book, respectively. For example, the second user account is an account of the US dollar account book of the second user. The third account is an account of the RMB account book of the second user.

Specifically, the step of updating a balance of the first user account of the first user under the first account book and a balance of a third account of the second user under the first account book according to the first ciphertext includes the following steps.

The smart contract deducts the preset exchange transaction share from the balance of the first user account of the first user under the first account book according to a first preset balance calculation formula, calculates a first new balance of the first user account of the first user under the first account book, and updates the calculated first new balance to a shared asset account book. For example, the first preset balance calculation formula is

$a_{1ij}''=a_{1ij}'/t_{1ij}'=(g^{a_{1ij}}*h^{x_{1ij}})/(g^{t_{ij}}*h^{z_{ij}})=g^{(a_{1ij}-t_{ij})}*h^{(x_{1ij}-z_{ij})}$, or $a_{1ij}''=h^{(a_{1ij}-t_{ij})}*g^{(x_{1ij}-z_{ij})}$, where $a_{1ij}$ represents a balance of the j-th first user account under the i-th account book, $x_{1ij}$ represents a balance privacy key of the j-th first user account under the i-th account book, $a_{1ij}''$ represents an encrypted new balance of the j-th first user account under the i-th account book, g and h are the bases, h is a n-th power of g, i and j are positive integers, "$a_{1ij}-t_{ij}$" represents a new balance of the j-th first user account under the i-th account book, "$x_{1ij}-z_{ij}$" represents a new confused balance privacy key of the j-th first user account under the i-th account book, $t_{ij}$ represents a transaction share of the j-th first user account under the i-th account book, and $z_{ij}$ represents a transaction share privacy key of the j-th first user account under the i-th account book.

The smart contract adds the preset exchange transaction share to the balance of the third account of the second user under the first account book according to a second preset balance calculation formula, calculates a second new balance of the third account of the second user under the first account book, and updates the calculated second new balance to the shared asset account book. For example, the second preset balance calculation formula is $a_{3ij}''=a_{3ij}'/t_{1ij}'=(g^{a_{3ij}}*h^{y_{3ij}})*(g^{t_{ij}}*h^{z_{ij}})=g^{(a_{3ij}+t_{ij})}*h^{(y_{3ij}-z_{ij})}$, or $a_{3ij}''=h^{(a_{3ij}+t_{ij})}*g^{(y_{3ij}+z_{ij})}$, where $a_{3ij}$ represents a balance of the j-th third account under the i-th account book, $y_{3ij}$ represents a balance privacy key of the j-th third account under the i-th account book, $a_{3ij}''$ represents an encrypted new balance of the j-th third account under the i-th account book, g and h are the bases, h is a n-th power of g, i and j are positive integers, "$a_{3ij}+t_{ij}$" represents a new balance of the j-th third account under the i-th account book, "$y_{3ij}+z_{ij}$" represents a new confused balance privacy key of the j-th third account under the i-th account book, $t_{ij}$ represents a transaction share of the j-th third account under the i-th account book, and $z_{ij}$ represents a transaction share privacy key of the j-th third account under the i-th account book.

The step of updating a balance of a fourth account of the first user under the second account book and a balance of the second user account of the second user under the second account book according to the first verification ciphertext includes the following steps.

The smart contract deducts the preset exchange transaction share from the balance of the second user account of the second user under the second account book according to a third preset balance calculation formula, calculates a third new balance of the second user account of the second user under the second account book, and updates the calculated third new balance to the shared asset account book. For example, the third preset balance calculation formula is $a_{2ij}''=a_{2ij}'/t_{2ij}'=(g^{a_{2ij}}*h^{x_{2ij}})*(g^{(t_{1ij}*e)}*h^{(z_{1ij}*e)}*h^{z_{2ij}})=g^{(a_{2ij}-(t_{ij}*e))}*h^{(x_{2ij}-(z_{1ij}*e)-z_{2ij})}$, or $a_{2ij}''=h^{(a_{2ij}-(t_{1ij}*e))}*g^{(x_{2ij}-(z_{1ij}*e)-z_{2ij})}$, where $a_{2ij}$ represents a balance of the j-th second user account under the i-th account book, $x_{2ij}$ represents a balance privacy key of the j-th second user account under the i-th account book, $a_{2ij}''$ represents an encrypted new balance of the j-th second user account under the i-th account book, g and h are the bases, h is a n-th power of g, i and j are positive integers, "$a_{2ij}-(t_{ij}*e)$" represents a new balance of the j-th second user account under the i-th account book, "$(x_{2ij}-(z_{1ij}*e)-z_{2ij})$" represents a new confused balance privacy key of the j-th second user account under the i-th account book, $t_{1ij}*e$" represents a transaction share of the j-th second user account under the i-th account book, and "$z_{1ij}*e$" represents a transaction share privacy key of the j-th second user account under the i-th account book.

The smart contract adds the preset exchange transaction share to the balance of the fourth account of the first user under the second account book according to a fourth preset balance calculation formula, calculates a fourth new balance of the fourth account of the first user under the second account book, and updates the calculated fourth new balance to the shared asset account book. For example, the fourth preset balance calculation formula is $a_{4ij}''=a_{4ij}'*t_{2ij}'=(g^{a_{4ij}}*h^{4ij})*(g^{(t_{1ij}*e)}*h^{(z_{1ij}*e)}*h^{z_{2ij}})=g^{(a_{4ij}+t_{1ij}*e)}*h^{(y_{4ij}+(z_{1ij}*e)+z_{2ij})}$, or $a_{4ij}''=h^{(a_{4ij}+(t_{ij}*e))}*g^{(y_{4ij}+(z_{1ij}*e))}$, where $a_{4ij}$ represents a balance of the j-th fourth account under the i-th account book, $y_{4ij}$ represents a balance privacy key of the j-th fourth account under the i-th account book, $a_{4ij}''$ represents an encrypted new balance of the j-th fourth account under the i-th account book, g and h are the bases, h is a n-th power of g, i and j are positive integers, "$a_{4ij}+(t_{1ij}*e)$" represents a new balance of the j-th fourth account under the i-th account book, "$(y_{4ij}+(z_{1ij}*e)+z_{2ij})$" represents a new confused balance privacy key of the j-th fourth account under the i-th account book, "$t_{1ij}*e$" represents a transaction share of the j-th fourth account under the i-th account book, and "$z_{1ij}*e$" represents a transaction share privacy key of the j-th fourth account under the i-th account book.

In a specific embodiment, an account book 1 and an account book 2 are used as examples below for description. Pre-step 1: A legal exchange rate value is set at the beginning of creation of the smart contract of the blockchain. For example, the legal exchange rate value is 1"1, 1"2, 1"3 ,1"4... The smart contract can predetermine the legal exchange rates. For example, the exchange rate of RMB and US dollar can only be 6.7, 6.8, 6.9, 7.0...

Pre-step 2: The balance of each user account under each account book is encrypted in the smart contract of the blockchain by using a password formula having an additive homomorphic property, and only an owner of the account can read the balance of his/her own account by decrypting with his/her own "account privacy key". Here, Pederson Commitment and ECC (elliptic curve) are used as examples for description. Certainly, other modes such as RSA and Diffie-Hellman are not limited. For example, Pederson Commitment can be used to represent each account. An account A exchanges the balance of the account book 1 for the balance of the account B in the account book 2. For example, A exchanges RMB (the account book 1) for US dollar (the account book 2) with B, A transfers some of the RMB balance in the account book 1 to B, and B transfer his/her US dollar to A in the account book 2. Specifically:
For the account book 1, the definition is as follows:

a1 = the balance of the account book 1 of the account A
a1' = the balance of the account book 1 of the account A after password confusion
x1 = the balance privacy key of the account book 1 of the account A

The balance of the account A is obtained: $a1'=g^{a1}*h^{x1}$. Definition:

b1 = the RMB balance of the account B
b1' = the RMB balance of the account B after password confusion
y1 = the RMB balance privacy key of the account B

The balance of the account B is obtained: $b1'=g^{b1}*h^{y1}$.
For the account book 2, the definition is as follows:

a2 = the balance of the account book 2 of the account A
a2' = the balance of the account book 2 of the account A after password confusion
x2 = the balance privacy key of the account book 2 of the account A

The balance of the account A is obtained: $a2'=g^{a2}*h^{x2}$.

Definition:

b2 = the RMB balance of the account B
b2' = the RMB balance of the account B after password confusion
y2 = the RMB balance privacy key of the account B

The balance of the account B is obtained: $b2'=g^{b2}*h^{y2}$.
Implementation step 1: If A wants to exchange the balance of the account book 1 for the balance of the account book 2 of B, A creates several ciphertexts, the first ciphertext is a transaction share (a first ciphertext) of the account book 1 protected by an additive homomorphic ciphertext, the second ciphertext is a transaction share (a first verification ciphertext) of the account book 2 protected by the additive homomorphic ciphertext, and the third ciphertext is a first verification ciphertext and a second verification ciphertext which prove that the third party verifies in a zero-knowledge environment that the exchange rate of the first account book and the second account book is within a legal range. Specifically:
For the first ciphertext, the transfer initiator (A) generates a homomorphic privacy key for the first ciphertext and a privacy key and an additional parameter for the first verification ciphertext and sends same to the counter party (B) together with the first ciphertext and the first verification ciphertext, and after the identification of B and the digital signature of the first ciphertext and the first verification ciphertext, the entire transaction and the signature of the party B are sent to the blockchain network (the digital signature of the party B represents the identification of the transaction share and the exchange rate).
t = the transaction share of the account book 1
t1' = the transaction share of the second account book after password confusion
z1 = the transaction share privacy key of the first account book
The first ciphertext (the transaction share of the account book 1) is obtained: $t1'=g^{t}*h^{z1}$.
The first verification ciphertext is defined:

e = the exchange rate, which should actually be one of the legal exchange rate ranges (r1, r2, r3, r4)
t*e = te = the transaction share of the second account book after password confusion
z2 = the transaction share additional privacy key of the second account book
t2' = the transaction share of the account book 2

The first verification ciphertext (the transaction share of the account book 2) is obtained: $t2'=g^{te}*h^{zle}*h^{z2}$.
For the first verification ciphertext, since e needs to be one of the preset reasonable exchange rate values (r1, r2, r3, r4), when the transaction share of the first account book is t, the transaction share of the second account book needs to be one of t*r1, t*r2, t*r3, and t*r4. Assuming e = r2, the transaction share of the second account book is t*r2. By means of the first ciphertext and the reasonable exchange rate value, the smart contract of the blockchain can easily calculate the confused reasonable transaction share of the second account book, then
the first verification ciphertext is as follows:

$$t21=(g^\wedge t*h^\wedge z1)^\wedge r1=g^\wedge(t*r1)*h^\wedge(z1*r1)$$

$$t22=(g^\wedge t*h^\wedge z1)^\wedge r2=g^\wedge(t*r2)*h^\wedge(z1*r2)$$

$$t23=(g^\wedge t*h^\wedge z1)^\wedge r3=g^\wedge(t*r3)*h^\wedge(z1*r3)$$

$$t24=(g^\wedge t*h^\wedge z1)^\wedge r4=g^\wedge(t*r4)*h^\wedge(z1*r4)$$

Due to the exchange rate privacy requirement, the transaction initiator cannot directly provide any one of t21-t24, and the transaction initiator adds a confusion key z2 to the transaction share in the provided second account book, so that the first verification ciphertext becomes t2'=t22'=g^(t*e)*h^(z1*e)*h^z2=g^(t*r2)*h^(z1*r2)*h^z2. Due to the existence of the confusion key z2, no party in the blockchain knows that the transaction share of the second account book has evolved from any of the shares t21-t24, or determines whether the transaction is still within the reasonable exchange rate range. Therefore, the transaction initiator needs to provide evidence that the transaction share of the second account book is still within the reasonable exchange rate range.

In this embodiment, the evidence can be provided by a ring signature. Four (here, only four are used as an example for description, and there may be more) public and private keys of the ring signature are:

sk1:t21 private key
sk2:t22 private key
sk3 :t23 private key
sk4:t24 private key

For the second verification ciphertext, each private key has the same ciphertext generated by converting each transaction share of the second account book to the correct transaction share:

$$t2'=(g^\wedge(t*r1)*h^\wedge(z1*r1)*h^\wedge sk1)$$

$$t2'=(g^\wedge(t*r2)*h^\wedge(z1*r2)*h^\wedge sk2)$$

$$t2'=(g^\wedge(t*r3)*h^\wedge(z1*r3)*h^\wedge sk3)$$

$$t2'=(g^\wedge(t*r4)*h^\wedge(z1*r4)*h^\wedge sk4)$$

The second verification ciphertext (pk1,pk2,pk3,pk4):

$$pk1=h^\wedge sk1=(g^\wedge(t*r1)*h^\wedge(z1*r1)*h^\wedge sk1)/(g^\wedge(t*r1)*h^\wedge(z1*r1))=h^\wedge?$$

$$pk2=h^\wedge sk2=(g^\wedge(t*r2)*h^\wedge(z1*r2)*h^\wedge sk2)/(g^\wedge(t*r2)*h^\wedge(z1*r2))=h^\wedge sk2=h^\wedge z2$$

$$pk3=h^\wedge sk3=(g^\wedge(t*r3)*h^\wedge(z1*r3)*h^\wedge sk3)/(g^\wedge(t*r3)*h^\wedge(z1*r3))=h^\wedge?$$

$$pk4=h^\wedge sk4=(g^\wedge(t*r4)*h^\wedge(z1*r4)*h^\wedge sk4)/(g^\wedge(t*r4)*h^\wedge(z1*r4))=h^\wedge?$$

It is obvious that the transaction initiator only knows that the corresponding private key is z2 when the exchange rate is r2. The ring signature evidence (s) is generated by z2, pk1, pk2, pk3, pk4, and a few parameters to prove that the exchange rate is one of the reasonable exchange rate values.

Implementation step 2 A: the smart contract verifies that the transaction share of the first account book and the second account book is within the reasonable exchange rate value. For example, the transaction share of the first account book and the second account book is verified to be within the reasonable exchange rate value by means of the ring signature or Range Proof.

Implementation step 2 B: The transaction share is added to the balance of the account A of the account book 1, and meanwhile, the transaction share is deducted from the balance of the account B of the account book 1. Specifically:

a new share of the account A in the account book 1: a1"=a1'*t'

$$a1"=(g^\wedge a1*h^\wedge x1)*(g^\wedge t*h^\wedge z1)$$

$$a1"=g^\wedge(a1+t)*h^\wedge(x1+z1)$$

a new balance of the account A = a1+t
a new confusion privacy key of the account A: x1'=(x1+z1).

A new share of the account B in the account book 1: b1"=b1'/t'

$$b1"=(g^\wedge b1*h^\wedge y1)/(g^\wedge t*h^\wedge z1)$$

$$b1"=g^\wedge(b1-t)*h^\wedge(y1-z1)$$

a new balance of the account B: b1'=b1-t
a new confusion privacy key of the account B: y1'=y1-z1.

Implementation step 2 C: the transaction share is deducted from the balance of the account A of the account book 2, and meanwhile, the transaction share is added to the balance of the account B of the account book 2. Specifically:

a new share of the account A in the account book 2: a2"=a2'/t2'

$$a2"=(g^\wedge a2*h^\wedge x2)/(g^\wedge(t*e)*h^\wedge(z1*e)*h^\wedge z2)$$

$$a2"=g^\wedge(a2-te)*h^\wedge(x2-z1*e-z2)$$

a new balance of the account A = a2-te
a new confusion privacy key of the account A: x2'=(x2-z1*e-z2).

A new share of the account B in the account book 2: b2"=b2'*te'

$$b2"=(g^\wedge b2*h^\wedge y2)*(g^\wedge(t*e)*h^\wedge(z1*e)*h^\wedge z2)$$

$$b2"=g^\wedge(b2+te)*h^\wedge(y2+z1*e+z2)$$

a new balance of the account B: b2'=b2+te

a new confusion privacy key of the account B: y2'=y2+z1*e+z2.

In addition, this application also provides a computer readable storage medium, where a zero-knowledge multi-account-book exchange transfer system based on blockchain is stored on the computer readable storage medium, and the zero-knowledge multi-account-book exchange transfer system based on blockchain can be executed by at least one processor, so that the at least one processor executes steps of the zero-knowledge multi-account-book exchange transfer method based on blockchain. Specific implementation processes such as steps S10, S20, and S30 of the zero-knowledge multi-account-book exchange transfer method based on blockchain are as stated above, and details are not described here again.

It should be noted that the term "comprise", "include", or any other variants thereof herein is intended to encompass in a non-exclusive mode, so that the process, method, article, or apparatus including a series of elements includes those elements, and also includes other elements that are not explicitly listed, or elements that are inherent to such a process, method, article, or apparatus. An element defined by the phrase "including a..." does not exclude the presence of the same element in the process, method, article, or apparatus that includes the element, without more restrictions.

By means of the description of the foregoing implementation modes, those skilled in the art can clearly understand that the method of the foregoing embodiments can be implemented by means of software and necessary general hardware platforms, and can also be implemented by hardware, but in many cases, the former is a better implementation mode. Based on such understanding, the part of the technical solution of this application, which is essential or contributes to the prior art, can be embodied in the form of a software product. The computer software product is stored in a storage medium (such as a ROM/RAM, a magnetic disk, and an optical disk) and includes several instructions for causing a terminal device (which may be a mobile phone, a computer, a server, an air conditioner, or a network device, etc.) to perform the method of each embodiment of this application.

The preferred embodiments of this application are described above with reference to the accompanying drawings, and are not intended to limit the scope of this application. The serial numbers of the embodiments of this application are merely for description, and do not represent the advantages and disadvantages of the embodiments. In addition, although the logical order is shown in the flowchart, in some cases, the steps shown or described may be performed in an order different from that described herein.

Those skilled in the art can implement this application in various variants without departing from the scope and spirit of this application. For example, the features of one embodiment can be used in another embodiment to obtain yet another embodiment. Any modifications, equivalent substitutions, improvements, etc. made within the technical concept of this application should fall within the claims of this application.

## Claims

1. A zero-knowledge multi-account-book exchange transfer method based on blockchain, applied to an electronic apparatus and comprising:

    A: if a first user account of a first user under a first account book in a blockchain issues a transaction request with a second user account of a second user under a second account book, receiving a first ciphertext generated by means of the first user performing encryption in advance, wherein the transaction request is a request for exchanging a preset exchange transaction share according to a preset exchange rate, and the first ciphertext is a first ciphertext generated by encrypting the preset exchange transaction share using a second preset password formula and a corresponding transaction share privacy key;

    B: acquiring the first ciphertext and a first verification ciphertext that have been subjected to a digital signature, wherein the first verification ciphertext is used to calculate an encryption exchange transaction share of the second account book by the first user according to the first preset exchange calculation formula as well as the preset exchange rate and the first ciphertext for the second account book, and the first verification ciphertext is generated by using a preset additional privacy parameter on the encryption exchange transaction share of the second account book;

    C: calculating each corresponding first verification value ciphertext by means of several preset legal exchange rate values and the first ciphertext; and calculating, by using each first verification value ciphertext and the first verification ciphertext, a second verification value ciphertext for verifying whether a preset exchange rate of the transaction between the first account book and the second account book is within a preset legal exchange rate value range; and

    D: if it is proved by using the second verification value ciphertext that a preset exchange rate of the transaction between the first account book and the second account book is within a preset legal exchange rate value range, completing the transaction between the first user account of the first user under the first account book and the second user account of the second user under the second account book according to a preset rule based on the first ciphertext and the first verification ciphertext.

**2.** The zero-knowledge multi-account-book exchange transfer method based on blockchain according to claim 1, wherein the step of acquiring the first ciphertext and a first verification ciphertext that have been subjected to a digital signature comprises:

sending, by the first user, the calculated first ciphertext and the first verification ciphertext after being subjected to the digital signature to the second user; after acquiring a transaction share identification and digital signature of the second user, publishing, by the first user, the first ciphertext and the first verification ciphertext to each node on a blockchain network; or sending, by the first user, the calculated first ciphertext and the first verification ciphertext after being subjected to the digital signature to the second user, and directly publishing, by the second user after the transaction share identification and digital signature, the first ciphertext and the first verification ciphertext to each node on the blockchain network; and

acquiring the published first ciphertext and the first verification ciphertext after being subjected to the digital signature from the blockchain network.

**3.** The zero-knowledge multi-account-book exchange transfer method based on blockchain according to claim 1, further comprising:

proving, by means of a preset ring signature verification mode, that the preset exchange rate of the transaction between the first account book and the second account book is within a preset legal exchange rate value range.

**4.** The zero-knowledge multi-account-book exchange transfer method based on blockchain according to claim 2, further comprising:

proving, by means of a preset ring signature verification mode, that the preset exchange rate of the transaction between the first account book and the second account book is within a preset legal exchange rate value range.

**5.** The zero-knowledge multi-account-book exchange transfer method based on blockchain according to claim 3, further comprising:

presenting a second verification value ciphertext corresponding to all legal transaction shares of the second account book; and if the first user or the second user verifies that the encryption exchange transaction share in the first verification ciphertext is a number within a preset reasonable transaction range according to a private key corresponding to the additional privacy parameter in the first verification ciphertext and all the second verification ciphertexts, proving that the preset exchange rate of the transaction between the first account book and the second account book is within a preset legal exchange rate value range.

**6.** The zero-knowledge multi-account-book exchange transfer method based on blockchain according to claim 4, further comprising:
presenting a second verification value ciphertext corresponding to all legal transaction shares of the second account book; and if the first user or the second user verifies that the encryption exchange transaction share in the first verification ciphertext is a number within a preset reasonable transaction range according to a private key corresponding to the additional privacy parameter in the first verification ciphertext and all the second verification ciphertexts, proving that the preset exchange rate of the transaction between the first account book and the second account book is within a preset legal exchange rate value range.

**7.** The zero-knowledge multi-account-book exchange transfer method based on blockchain according to claim 1, wherein step D comprises:
if it is proved by using the second verification value ciphertext that the preset exchange rate of the transaction between the first account book and the second account book is within the preset legal exchange rate value range, updating a balance of the first user account of the first user under the first account book and a balance of a third account of the second user under the first account book according to the first ciphertext, and updating a balance of a fourth account of the first user under the second account book and a balance of the second user account of the second user under the second account book according to the first verification ciphertext.

**8.** The zero-knowledge multi-account-book exchange transfer method based on blockchain according to claim 2, wherein step D comprises:
if it is proved by using the second verification value ciphertext that the preset exchange rate of the transaction between the first account book and the second account book is within the preset legal exchange rate value range, updating a balance of the first user account of the first user under the first account book and a balance of a third account of the second user under the first account book according to the first ciphertext, and updating a balance of a fourth account of the first user under the second account book and a balance of the second user account of the second user under the second account book according to the first verification ciphertext.

9. The zero-knowledge multi-account-book exchange transfer method based on blockchain according to claim 7, wherein the step of updating a balance of the first user account of the first user under the first account book and a balance of a third account of the second user under the first account book according to the first ciphertext comprises:

deducting the preset exchange transaction share from the balance of the first user account of the first user under the first account book according to a first preset balance calculation formula, calculating a first new balance of the first user account of the first user under the first account book, and updating the calculated first new balance to a shared asset account book; and

adding the preset exchange transaction share to the balance of the third account of the second user under the first account book according to a second preset balance calculation formula, calculating a second new balance of the third account of the second user under the first account book, and updating the calculated second new balance to the shared asset account book.

10. The zero-knowledge multi-account-book exchange transfer method based on blockchain according to claim 8, wherein the step of updating a balance of the first user account of the first user under the first account book and a balance of a third account of the second user under the first account book according to the first ciphertext comprises:

deducting the preset exchange transaction share from the balance of the first user account of the first user under the first account book according to a first preset balance calculation formula, calculating a first new balance of the first user account of the first user under the first account book, and updating the calculated first new balance to a shared asset account book; and

adding the preset exchange transaction share to the balance of the third account of the second user under the first account book according to a second preset balance calculation formula, calculating a second new balance of the third account of the second user under the first account book, and updating the calculated second new balance to the shared asset account book.

11. The zero-knowledge multi-account-book exchange transfer method based on blockchain according to claim 9, wherein the step of updating a balance of a fourth account of the first user under the second account book and a balance of the second user account of the second user under the second account book according to the first verification ciphertext comprises:

deducting the preset exchange transaction share from the balance of the second user account of the second user under the second account book according to a third preset balance calculation formula, calculating a third new balance of the second user account of the second user under the second account book, and updating the calculated third new balance to the shared asset account book; and

adding the preset exchange transaction share to the balance of the fourth account of the first user under the second account book according to a fourth preset balance calculation formula, calculating a fourth new balance of the fourth account of the first user under the second account book, and updating the calculated fourth new balance to the shared asset account book.

12. The zero-knowledge multi-account-book exchange transfer method based on blockchain according to claim 10, wherein the step of updating a balance of a fourth account of the first user under the second account book and a balance of the second user account of the second user under the second account book according to the first verification ciphertext comprises:

deducting the preset exchange transaction share from the balance of the second user account of the second user under the second account book according to a third preset balance calculation formula, calculating a third new balance of the second user account of the second user under the second account book, and updating the calculated third new balance to the shared asset account book; and

adding the preset exchange transaction share to the balance of the fourth account of the first user under the second account book according to a fourth preset balance calculation formula, calculating a fourth new balance of the fourth account of the first user under the second account book, and updating the calculated fourth new balance to the shared asset account book.

**13.** An electronic apparatus, comprising a memory and a processor, wherein a zero-knowledge multi-account-book exchange transfer system based on blockchain capable of running on the processor is stored on the memory, and when the zero-knowledge multi-account-book exchange transfer system based on blockchain is executed by the processor, the following steps are implemented:

if a first user account of a first user under a first account book in a blockchain issues a transaction request with a second user account of a second user under a second account book, receiving a first ciphertext generated by means of the first user performing encryption in advance, wherein the transaction request is a request for exchanging a preset exchange transaction share according to a preset exchange rate, and the first ciphertext is a first ciphertext generated by encrypting the preset exchange transaction share using a second preset password formula and a corresponding transaction share privacy key;

acquiring the first ciphertext and a first verification ciphertext that have been subjected to a digital signature, wherein the first verification ciphertext is used to calculate an encryption exchange transaction share of the second account book by the first user according to the first preset exchange calculation formula as well as the preset exchange rate and the first ciphertext for the second account book, and the first verification ciphertext is generated by using a preset additional privacy parameter on the encryption exchange transaction share of the second account book;

calculating each corresponding first verification value ciphertext by means of several preset legal exchange rate values and the first ciphertext; and calculating, by using each first verification value ciphertext and the first verification ciphertext, a second verification value ciphertext for verifying whether a preset exchange rate of the transaction between the first account book and the second account book is within a preset legal exchange rate value range; and

if it is proved by using the second verification value ciphertext that a preset exchange rate of the transaction between the first account book and the second account book is within a preset legal exchange rate value range, completing the transaction between the first user account of the first user under the first account book and the second user account of the second user under the second account book according to a preset rule based on the first ciphertext and the first verification ciphertext.

**14.** The electronic apparatus according to claim 13, wherein when the zero-knowledge multi-account-book exchange transfer system based on blockchain is executed by the processor to implement the step of acquiring the first ciphertext and the first verification ciphertext that have been subjected to a digital signature, specifically comprising:

sending, by the first user, the calculated first ciphertext and the first verification ciphertext after being subjected to the digital signature to the second user; after acquiring a transaction share identification and digital signature of the second user, publishing, by the first user, the first ciphertext and the first verification ciphertext to each node on a blockchain network; or sending, by the first user, the calculated first ciphertext and the first verification ciphertext after being subjected to the digital signature to the second user, and directly publishing, by the second user after the transaction share identification and digital signature, the first ciphertext and the first verification ciphertext to each node on the blockchain network; and

acquiring the published first ciphertext and the first verification ciphertext after being subjected to the digital signature from the blockchain network.

**15.** The electronic apparatus according to claim 13, wherein the processor is further used for executing the zero-knowledge multi-account-book exchange transfer system based on blockchain to implement the following step:

proving, by means of a preset ring signature verification mode, that the preset exchange rate of the transaction between the first account book and the second account book is within a preset legal exchange rate value range.

**16.** The electronic apparatus according to claim 14, wherein the processor is further used for executing the zero-knowledge multi-account-book exchange transfer system based on blockchain to implement the following step:

proving, by means of a preset ring signature verification mode, that the preset exchange rate of the transaction between the first account book and the second account book is within a preset legal exchange rate value range.

**17.** The electronic apparatus according to claim 15, wherein the processor is further used for executing the zero-knowledge multi-account-book exchange transfer system based on blockchain to implement the following step:

presenting a second verification value ciphertext corresponding to all legal transaction shares of the second account book; and if the first user or the second user verifies that the encryption exchange transaction share in the first verification ciphertext is a number within a preset reasonable transaction range according to a private key corresponding to the additional privacy parameter in the first verification ciphertext and all the second verification ciphertexts, proving that the preset exchange rate of the transaction between the first account book and the second account book is within a preset legal exchange rate value range.

18. The electronic apparatus according to claim 16, wherein the processor is further used for executing the zero-knowledge multi-account-book exchange transfer system based on blockchain to implement the following step: presenting a second verification value ciphertext corresponding to all legal transaction shares of the second account book; and if the first user or the second user verifies that the encryption exchange transaction share in the first verification ciphertext is a number within a preset reasonable transaction range according to a private key corresponding to the additional privacy parameter in the first verification ciphertext and all the second verification ciphertexts, proving that the preset exchange rate of the transaction between the first account book and the second account book is within a preset legal exchange rate value range.

19. The electronic apparatus according to claim 13, wherein the step of if it is proved by using the second verification value ciphertext that a preset exchange rate of the transaction between the first account book and the second account book is within a preset legal exchange rate value range, completing the transaction between the first user account of the first user under the first account book and the second user account of the second user under the second account book according to a preset rule based on the first ciphertext and the first verification ciphertext comprises:

if it is proved by using the second verification value ciphertext that the preset exchange rate of the transaction between the first account book and the second account book is within the preset legal exchange rate value range, updating a balance of the first user account of the first user under the first account book and a balance of a third account of the second user under the first account book according to the first ciphertext, and updating a balance of a fourth account of the first user under the second account book and a balance of the second user account of the second user under the second account book according to the first verification ciphertext.

20. A computer readable storage medium, wherein a zero-knowledge multi-account-book exchange transfer system based on blockchain is stored on the computer readable storage medium, and when the zero-knowledge multi-account-book exchange transfer system based on blockchain is executed by a processor, the following steps are implemented:

if a first user account of a first user under a first account book in a blockchain issues a transaction request with a second user account of a second user under a second account book, receiving a first ciphertext generated by means of the first user performing encryption in advance, wherein the transaction request is a request for exchanging a preset exchange transaction share according to a preset exchange rate, and the first ciphertext is a first ciphertext generated by encrypting the preset exchange transaction share using a second preset password formula and a corresponding transaction share privacy key;

acquiring the first ciphertext and a first verification ciphertext that have been subjected to a digital signature, wherein the first verification ciphertext is used to calculate an encryption exchange transaction share of the second account book by the first user according to the first preset exchange calculation formula as well as the preset exchange rate and the first ciphertext for the second account book, and the first verification ciphertext is generated by using a preset additional privacy parameter on the encryption exchange transaction share of the second account book;

calculating each corresponding first verification value ciphertext by means of several preset legal exchange rate values and the first ciphertext; and calculating, by using each first verification value ciphertext and the first verification ciphertext, a second verification value ciphertext for verifying whether a preset exchange rate of the transaction between the first account book and the second account book is within a preset legal exchange rate value range; and

if it is proved by using the second verification value ciphertext that a preset exchange rate of the transaction between the first account book and the second account book is within a preset legal exchange rate value range, completing the transaction between the first user account of the first user under the first account book and the second user account of the second user under the second account book according to a preset rule based on the first ciphertext and the first verification ciphertext.

Electronic apparatus 1

Zero-knowledge
multi-account-book
exchange transfer
system based on
blockchain 10

Memory 11

Processor 12

Network
interface 13

FIG. 1

If a first user account of a first user under a first account book in a blockchain issues a transaction request with a second user account of a second user under a second account book, receive a first ciphertext generated by means of the first user performing encryption in advance — S10

Acquire the first ciphertext and a first verification ciphertext that have been subjected to a digital signature — S20

Calculate each corresponding first verification value ciphertext by means of several preset legal exchange rate values and the first ciphertext, and calculate, by using each first verification value ciphertext and the first verification ciphertext, a second verification value ciphertext for verifying whether a preset exchange rate of the transaction between the first account book and the second account book is within a preset legal exchange rate value range — S30

If it is proved by using the second verification value ciphertext that the preset exchange rate of the transaction between the first account book and the second account book is within the preset legal exchange rate value range, complete the transaction between the first user account of the first user under the first account book and the second user account of the second user under the second account book according to a preset rule based on the first ciphertext and the first verification ciphertext — S40

FIG. 2

## INTERNATIONAL SEARCH REPORT

| | |
|---|---|
| International application No. |
| **PCT/CN2018/102398** |

**A.    CLASSIFICATION OF SUBJECT MATTER**

G06Q 20/38(2012.01)i;  G06F 21/64(2013.01)i

According to International Patent Classification (IPC) or to both national classification and IPC

**B.    FIELDS SEARCHED**

Minimum documentation searched (classification system followed by classification symbols)

G06Q; G06F

Documentation searched other than minimum documentation to the extent that such documents are included in the fields searched

Electronic data base consulted during the international search (name of data base and, where practicable, search terms used)

CNABS, CNTXT, CNKI, DWPI,SIPOABS: 区块链, 账本, 账户, 兑换, 密文, 密码, 密匙, 秘钥, 隐私, 零知识, block chain, account, exchange, transaction, cipher, cryptograph, zero knowledge

**C.    DOCUMENTS CONSIDERED TO BE RELEVANT**

| Category* | Citation of document, with indication, where appropriate, of the relevant passages | Relevant to claim No. |
|---|---|---|
| PX | CN 108335106 A (SHENZHEN ONECONNECT SMART TECHNOLOGY CO., LTD.) 27 July 2018 (2018-07-27)<br>   claims 1-10 | 1-20 |
| A | CN 107077675 A (SHENZHEN QIANHAI CLOUDMINDS TECHNOLOGY CO., LTD.) 18 August 2017 (2017-08-18)<br>   description, paragraphs 27-172, and figures 1-12 | 1-20 |
| A | CN 106960388 A (ZHONGCHAO CREDIT CARD INDUSTRY DEVELOPMENT CO., LTD. BEIJING SMART CARD TECHNOLOGY RESEARCH INSTITUTE) 18 July 2017 (2017-07-18)<br>   entire document | 1-20 |
| A | CN 106845960 A (SHANGHAI YIZHANGTONG BLOCKCHAIN TECH CO., LTD.) 13 June 2017 (2017-06-13)<br>   entire document | 1-20 |
| A | US 2015363783 A1 (BANK OF AMERICA CORP) 17 December 2015 (2015-12-17)<br>   entire document | 1-20 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 November 2018** | **28 November 2018** |

| Name and mailing address of the ISA/CN | Authorized officer |
|---|---|
| **State Intellectual Property Office of the P. R. China (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/102398**

| Patent document cited in search report | | | Publication date (day/month/year) | Patent family member(s) | | | Publication date (day/month/year) |
|---|---|---|---|---|---|---|---|
| CN | 108335106 | A | 27 July 2018 | None | | | |
| CN | 107077675 | A | 18 August 2017 | WO | 2018120057 | A1 | 05 July 2018 |
| CN | 106960388 | A | 18 July 2017 | None | | | |
| CN | 106845960 | A | 13 June 2017 | WO | 2018137316 | A1 | 02 August 2018 |
| | | | | CN | 106845960 | B | 20 March 2018 |
| US | 2015363783 | A1 | 17 December 2015 | None | | | |

Form PCT/ISA/210 (patent family annex) (January 2015)

**REFERENCES CITED IN THE DESCRIPTION**

**Patent documents cited in the description**

- CN 2018100672929